# EUROPÄISCHE PATENTANMELDUNG

(11) **EP 1 153 558 A2**
(43) Veröffentlichungstag der Anmeldung: **14.11.2001**
(21) Anmeldenummer: 01111561.5
(22) Anmeldetag: 11.05.2001
(51) Int. Cl.: A47C 23/00

(54) **Federvorrichtung**

(30) Priorität: 12.05.2000 DE 10023466
(71) Anmelder: Heidinger, Florian, Dr., 83627 Warngau (DE); Jaspert, Bodo F., Dr., 85630 Neukeferloh (DE); Diemer, Gregor, 85456 Wartenberg (DE); Jereb, Edwin, 85764 Oberschleissheim (DE)
(72) Erfinder: Heidinger, Florian, Dr., 83627 Warngau (DE); Jaspert, Bodo F., Dr., 85630 Neukeferloh (DE); Diemer, Gregor, 85456 Wartenberg (DE); Jereb, Edwin, 85764 Oberschleissheim (DE)
(74) Vertreter: Manitz, Finsterwald & Partner GbR

(57) **Zusammenfassung**

Federvorrichtung, insbesondere als Teil einer Untermatratze zur Abstützung oder als Federkern einer Polsterauflage oder Matratze, mit mindestens zwei nebeneinander angeordneten im wesentlichen ringförmigen Biegefederelementen (1,2), deren Ringebenen in Federrichtung (I) und zueinander parallel verlaufen und die in Federrichtung (I) gesehen in einem oberen und/oder unteren Ringabschnitt, insbesondere einstückig, miteinander verbunden sind. Damit wird eine hohe Kippstabilität der Federvorrichtung in allen Richtungen erreicht.

## Beschreibung

Die vorliegende Erfindung betrifft eine Federvorrichtung, insbesondere als Teil einer Untermatratze zur Abstützung oder als Federkern einer Polsterauflage oder Matratze.

Zur Abstützung von Matratzen ist es bekannt, in der Untermatratze anstelle von biegsamen Latten einzelne Federvorrichtungen zu verwenden, die über zumindest einen Teil der Auflagefläche verteilt angeordnet sind. In diesen Bereichen kann dadurch eine annähernd punktelastische Abstützung erreicht werden. Die hierfür verwendeten Federvorrichtungen umfassen beispielsweise ein Federelement in Form eines Kreisringes oder Polygons sowie eine obere und eine untere Stützplatte.

Problematisch bei derartigen Federvorrichtungen ist die oftmals unzureichende Kippstabilität. Insbesondere bei nicht zentraler Belastung der Federvorrichtungen können diese in zumindest einer Richtung einknicken. Die Federwirkung wird dadurch nachteilig beeinflußt. Insbesondere wird die gewünschte Federkennlinie nicht mehr eingehalten.

Der Erfindung liegt die Aufgabe zugrunde, eine Federvorrichtung der genannten Art anzugeben, welche gegenüber den bekannten Federvorrichtungen dieser Art verbessert ist. Insbesondere soll die Federvorrichtung in allen Richtungen eine gute Kippstabilität aufweisen.

Diese Aufgabe wird gelöst durch eine Federvorrichtung mit mindestens zwei nebeneinander angeordneten im wesentlichen ringförmigen Biegefederelementen, deren Ringebenen in Federrichtung und zueinander parallel verlaufen und die in Federrichtung gesehen in einem oberen und/oder unteren Ringabschnitt, insbesondere einstückig, miteinander verbunden sind.

Im wesentlichen ringförmige Biegefederelemente weisen in der Ringebene eine gute Kippstabilität auf. Durch die Anordnung von mindestens zwei derartigen Biegefederelementen parallel nebeneinander wird eine hohe Kippstabilität auch senkrecht zu den Ringebenen erreicht. Insgesamt ergibt sich damit eine gute Kippstabilität der Federvorrichtung in allen Richtungen. Durch die zueinander parallele Anordnung der Biegefederelemente ist außerdem eine unproblematische einstückige Herstellung gewährleistet.

Bevorzugt weisen die Biegefederelemente in der Ringebene eine quer zur Federrichtung langgestreckte Form auf. Hierdurch wird die Kippstabilität in der Ringebene vorteilhaft erhöht.

Ebenfalls bevorzugt weisen die Biegefederelemente einen Abstand zueinander auf und sind in ihrem oberen und/oder unteren Ringabschnitt über einen zumindest annähernd senkrecht zur Federrichtung verlaufenden Verbindungsabschnitt miteinander verbunden. Hierdurch wird die Kippstabilität quer zu den Ringebenen vorteilhaft erhöht.

Nach einer weiteren Ausgestaltung der Erfindung ist der Verbindungsabschnitt der Biegefederelemente als insbesondere zumindest annähernd ebene Stützfläche ausgebildet. Damit kann eine gute Kraftübertragung gewährleistet werden.

Gemäß einer bevorzugten Ausgestaltung der Erfindung sind mindestens drei Biegefederelemente nebeneinander angeordnet. Damit kann der Federvorrichtung eine zwei- oder mehrstufige Federkennlinie gegeben werden.

Beispielsweise können die beiden äußersten Biegefederelemente eine untereinander gleiche Höhe aufweisen, die größer ist als die Höhe mindestens eines inneren Biegefederelementes. Bei Einbringen einer Kraft auf die Federvorrichtung werden zunächst nur die beiden äußersten Biegefederelemente belastet und komprimiert, so daß nur deren Federeigenschaften die Federkennlinie der Federvorrichtung bestimmen. Erst nach Zurücklegen eines bestimmten Federweges wird auch das innere Biegefederelement mit geringerer Höhe belastet und trägt mit seinen Federeigenschaften zur Bestimmung der Federkennlinie der Federvorrichtung bei. Durch die außenliegende Anordnung der Biegefederelemente mit größerer Höhe bleibt auch bei dieser mehrstufigen Federvorrichtung die gute Kippstabilität in allen Richtungen erhalten. Bei mehr als drei nebeneinander angeordneten Biegefederelementen können auch noch weitere Biegefederelemente dieselbe Höhe aufweisen wie die beiden äußersten Biegefederelemente. Wichtig ist dabei eine symmetrische Anordnung, um die gute Kippstabilität beizubehalten.

Eine andere Möglichkeit, mit einer Federvorrichtung mit mindestens drei nebeneinander angeordneten Biegefederelementen eine mehrstufige Federkennlinie zu realisieren, besteht darin, eine Federanordnung mit einer solchen Federvorrichtung und Abstützmittel zur Abstützung der Federvorrichtung vorzusehen, bei welcher die beiden äußersten Biegefederelemente und mindestens ein inneres Biegefederelement eine untereinander gleiche Höhe aufweisen und bei einer Kompression der Federvorrichtung mit je einem Abstützmittel zusammenwirken, wobei die Abstützmittel der beiden äußersten Biegefederelemente untereinander gleichzeitig und vor dem Abstützmittel für das innere Biegefederelement zur Wirkung kommen. Die beiden äußeren Biegefederelemente können beispielsweise auf einer Stützfläche abgestützt sein, die im Bereich des mittleren Biegefederelementes eine Ausnehmung aufweist, so daß dieses zunächst unabgestützt ist. Mit Abstand zu dem mittleren Biegefederelement ist dann eine weitere Stützfläche angeordnet, auf welcher sich das mittlere Biegefederelement nach Zurücklegen eines bestimmten Weges abstützt. Dadurch wird die Federkennlinie der Federvorrichtung zunächst nur durch die beiden äußersten Biegefederelemente bestimmt und erst nach Zurücklegen eines bestimmten Federweges durch die beiden äußersten und das mittlere Biegefederelemente gemeinsam. Dadurch daß die beiden äußersten Biegefederelemente vor dem mittleren Biegefederelement abgestützt werden, ist wiederum eine gute Kippstabilität senkrecht zu den Ringebenen gewährleistet.

Eine weitere Möglichkeit, eine zwei- und mehrstufige Federkennlinie zu erzielen, die auch für sich beansprucht wird, besteht darin, eine Federvorrichtung mit mindestens zwei im wesentlichen ringförmigen Biegefederelementen, deren Ringebenen in Federrichtung verlaufen, vorzusehen, bei welcher die Biegefederelemente mindestens zum Teil derart ineinander geschachtelt angeordnet sind, daß bei Einbringen einer Kompressionskraft ein äußeres Biegefederelement jeweils nach Zurücklegen eines ersten Federweges an einem nächstinneren Biegefederelement zur Anlage kommt und während eines zweiten Federweges einen Teil der Kompressionskraft auf dieses überträgt.

Durch das Ineinanderschachteln von derartigen Biegefederelementen kann in konstruktiv unaufwendiger Weise eine mehrstufige Federkennlinie erreicht werden. Es können dabei zwei, drei oder mehr Biegefederelemente ineinander geschachtelt sein. Dabei können zwei, drei oder mehr Biegefederelemente nebeneinander in einem äußeren Biegefederelement angeordnet sein, oder die Biegefederelemente können mehrfach ineinander geschachtelt sein.

Bevorzugt ist es, wenn der erste Federweg jeweils ca. 20 bis ca. 50 %, insbesondere ca. 25 bis ca. 33 % des gesamten Federweges der Federvorrichtung beträgt. Insbesondere bei einer zweistufigen Federkennlinie werden dadurch günstige Federwege und Kraftverläufe erreicht.

Die Ringebenen der ineinander geschachtelten Biegefederelemente sind nach einer Ausgestaltung der Erfindung zueinander parallel, insbesondere miteinander identisch. Damit kann eine gute Kraftübertragung sichergestellt werden. Außerdem können derartige Federvorrichtungen problemlos einstückig hergestellt werden.

Nach einer weiteren Ausgestaltung der Erfindung können die Ringebenen der Biegefederelemente mindestens teilweise zueinander senkrecht stehen. Damit wird eine hohe Kippstabilität in allen Ringebenen und somit insgesamt eine gute Kippstabilität in allen Richtungen erreicht.

Nach einer weiteren Ausgestaltung der Erfindung sind mindestens zwei innere Biegefederelemente mit zueinander paralleler Ringebene in mindestens zwei äußeren Biegefederelementen mit zueinander parallelen Ringebenen angeordnet. Dadurch kann die Kippstabilität senkrecht zu den Ringebenen weiter erhöht werden. Wenn alle Ringebenen zueinander parallel sind, kann die Federvorrichtung problemlos einstückig hergestellt werden.

Nach einer weiteren Ausgestaltung der Erfindung sind die verschiedenen Stufen der Federkennlinie auf verschiedene Körpergewichte eingestellt. Dies hat den Vorteil, daß mit der Federvorrichtung eine Abstützung für Personen mit unterschiedlichem Gewicht aufgebaut werden kann. Bei Personen mit einem geringeren Gewicht wirkt im wesentlichen nur die erste Stufe der Federkennlinie, die durch das oder die zuerst wirksamen Biegefederelemente bestimmt wird. Bei Personen mit einem größeren Körpergewicht kommen auch das oder die weiteren Biegefederelemente zur Wirkung, so daß die durch diese zumindest mitbestimmte Federkennlinie zum Tragen kommt.

Bei allen Varianten weisen die Biegefederelemente bevorzugt eine runde Form, insbesondere die Form einer Ellipse oder eines Ovals auf, deren große Achse quer zur Federrichtung verläuft. Damit kann eine gute Federwirkung erzielt werden. Außerdem ist diese Form ästhetisch besonders ansprechend. Ein weiterer Vorteil einer solchen Form besteht darin, daß sich die Federelemente bei Kompression zunehmend an eine zur Abstützung verwendete Deckplatte und eine Grundplatte anlegen. Die an der jeweiligen Platte anliegenden Abschnitte der Biegefederelemente federn nicht mehr, so daß immer kürzere Abschnitte der Biegefederelemente die Federkennlinie bestimmen. Damit ergibt sich in besonders vorteilhafter Weise eine kontinuierlich progressive Federkennlinie.

Eine andere in allen Fällen bevorzugte Ausgestaltung ist es, wenn die Biegefederelemente die Form eine Polygons aufweisen, welches insbesondere quer zur Federrichtung eine größere Erstreckung aufweist als in Federrichtung. Beispielsweise können die Biegefederelemente die Form eines langgestreckten Hexagons mit zueinander parallelen Längsseiten aufweisen, dessen große Achse quer zur Federrichtung verläuft. Die Biegestellen liegen dadurch relativ weit außen in den kurzen Seiten des Hexagons, wodurch die Kippstabilität weiter verbessert werden kann. Die langen Seiten des Hexagons liegen dagegen an der Deck- und an der Grundplatte an und tragen zur Elastizität der Biegefederelemente praktisch nichts bei.

Die vier kurzen Seiten des Hexagons können nach außen oder nach innen weisen. Besonders günstig für die Biegeeigenschaften ist es allerdings, wenn die vier kurzen Seiten nach außen weisen.

Die Biegefederelemente weisen bevorzugt die Form eines flachen Bandes auf, dessen Flachseiten quer zur Federrichtung verlaufen. Damit wird eine hohe Stabilität mit guten Federeigenschaften kombiniert.

Bevorzugt ist es außerdem, wenn die Materialstärke der Schenkel in den im wesentlichen in Federrrichtung verlaufenden, relativ unelastischen Bereichen reduziert ist. Auch hierdurch können die Biegeeigenschaften der Biegefederelemente verbessert werden.

Eine Verbesserung der Biegeeigenschaften kann auch dadurch erreicht werden, daß die Breite der Schenkel in diesen relativ unelastischen Bereichen verringert ist. Hier sowie im vorherigen Fall wird die erforderliche Biegekraft bevorzugt verringert. Dies wirkt sich auch auf die Kippstabilität positiv aus, da eine geringe erforderliche Biegekraft insbesondere in Verbindung mit dem durch die langgestreckte Form der Biegefederelemente bewirkten langen Hebelarm eine geringe Kippneigung bedeutet.

Auf der Oberseite und/oder der Unterseite der Biegefederelemente können außerdem Befestigungsmittel, insbesondere hintergreifbare Ausnehmungen angeformt sein. Damit wird die Verbindung der Federvorrichtung mit einer Deckplatte und/oder einer Grundplatte vereinfacht.

Die Biegefederelemente können auch nur über eine Deckplatte und/oder über eine Grundplatte miteinander verbunden sein. Die Verbindungsabschnitte zwischen den Biegefederelementen sind dadurch entbehrlich, und es wird entsprechend Material eingespart.

Nach einer weiteren Ausgestaltung der Erfindung ist mindestens ein Teil der Biegefederelemente lösbar mit einer Deckplatte und/oder einer Grundplatte verbindbar. Einzelne Elemente können dadurch wahlweise eingesetzt werden. Beispielsweise kann bei einer Federvorrichtung mit drei nebeneinander angeordneten Biegefederelementen das mittlere Biegefederelement zur Veränderung der Federkennlinie wahlweise eingesetzt oder weggelassen werden. Auch ein Austausch gegen andere Biegefederelemente ist auf diese Weise einfach möglich.

Die Biegefederelemente können auch aus teilringförmigen Elementen zusammengesetzt sein. Beispielsweise kann ein Biegefederelement aus zwei Teilringen bestehen, die durch Anbringen an einen oder zwei Verbindungsabschnitte oder an eine Deck- und/oder Grundplatte zu einem Ring zusammengefügt werden. Dabei können die beiden Teilringelemente auch voneinander beabstandet bleiben, also entsprechend verkürzt ausgebildet sein. Der Ring wird dann über den oder die Verbindungsabschnitte oder die Deck- und/oder Grundplatte geschlossen. Auch hierdurch kann Material eingespart werden.

Ausgestaltungen der Erfindung sind in der Zeichnung dargestellt und werden nachfolgend beschrieben. Es zeigen, jeweils in schematischer Darstellung,
- Fig. 1: eine perspektivische Ansicht einer ersten Variante einer erfindungsgemäßen Federvorrichtung,
- Fig. 2: eine Seitenansicht der Federvorrichtung von Fig. 1,
- Fig. 3: eine Draufsicht auf die Oberseite der Federvorrichtung von Fig. 1,
- Fig. 4: eine um 90° gedrehte Seitenansicht der Federvorrichtung von Fig. 1,
- Fig. 5: eine perspektivische Ansicht einer zweiten Variante einer erfindungsgemäßen Federvorrichtung,
- Fig. 6: eine Fig. 2 entsprechende Seitenansicht der Federvorrichtung von Fig. 5,
- Fig. 7: eine perspektivische Ansicht einer dritten Variante einer erfindungsgemäßen Federvorrichtung,
- Fig. 8: eine Fig. 2 entsprechende Ansicht der Federvorrichtung von Fig. 7,
- Fig. 9: eine perspektivische Ansicht einer vierten Variante einer erfindungsgemäßen Federvorrichtung,
- Fig. 10: eine perspektivische Ansicht einer fünften Variante einer erfindungsgemäßen Federvorrichtung,
- Fig. 11: eine Fig. 2 entsprechende Ansicht der Federvorrichtung von Fig. 10,
- Fig. 12: eine perspektivische Ansicht einer sechsten Variante einer erfindungsgemäßen Federvorrichtung,
- Fig. 13: eine Fig. 2 entsprechende Ansicht der Federvorrichtung von Fig. 12,
- Fig. 14: eine perspektivische Ansicht einer siebten Variante einer erfindungsgemäßen Federvorrichtung und
- Fig. 15: eine Draufsicht auf die Oberseite der Federvorrichtung von Fig. 14.

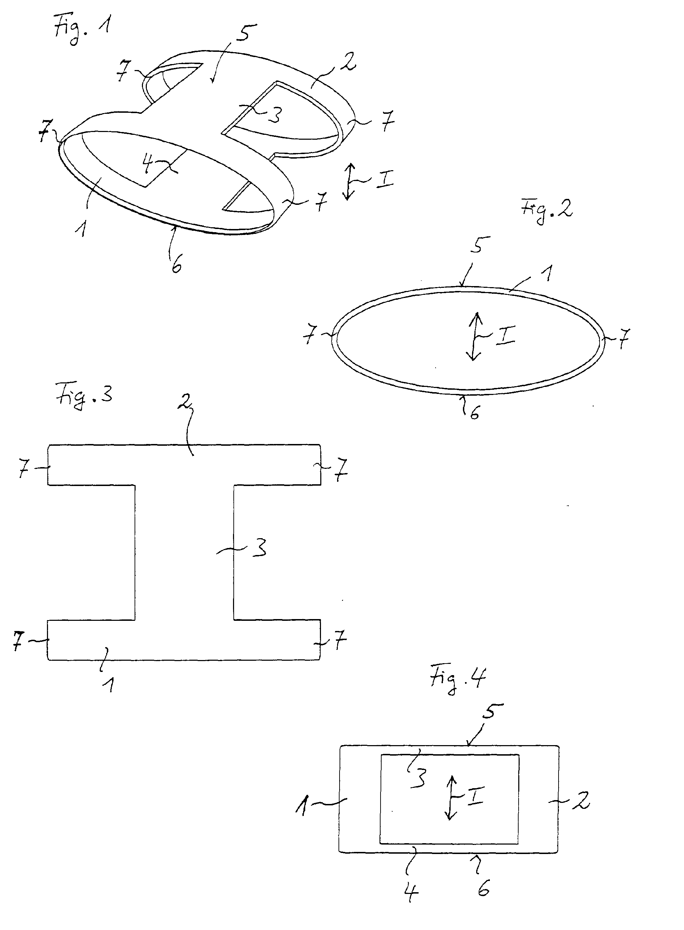

Die in Fig. 1 bis Fig. 4 dargestellte Federvorrichtung umfaßt zwei nebeneinander angeordnete Biegefederelemente 1, 2, die jeweils die Form eines elliptischen Ringes aufweisen, wie man insbesondere in Fig. 2 erkennt. Die beiden Biegefederelemente 1, 2 weisen außerdem eine flache, bandartige Form auf, wobei die Flachseite jeweils quer zur Federrichtung I verläuft.

Wie man insbesondere in den Fig. 1 und 3 erkennt, verlaufen die Ringebenen der beiden Biegefederelemente 1, 2 in Federrichtung I und parallel zueinander. Dabei sind die Biegefederelemente 1, 2 voneinander beabstandet und in einem oberen und einem unteren Ringabschnitt über jeweils einen Verbindungsabschnitt 3, 4 miteinander einstückig verbunden. Die beiden Verbindungsabschnitte 3, 4 verlaufen jeweils im wesentlichen senkrecht zur Federrichtung I und bilden zusammen mit den angrenzenden Ringabschnitten der Biegefederelemente 1, 2 eine obere Stützfläche 5 und eine untere Stützfläche 6. Die Stützfläche 5 kann direkt als Tragfläche, beispielsweise für ein Polsterelement oder eine Matratze, dienen. Entsprechend kann die Stützfläche 6 direkt zur Abstützung der Federvorrichtung auf einer Unterlage dienen. Es ist aber auch möglich, im Bereich der Stützflächen 5 und 6 Verbindungsmittel für eine separate Deckplatte oder eine Grundplatte vorzusehen.

Bei Einbringen einer Kompressionskraft in Federrichtung I, beispielsweise bei Belastung einer von der Federvorrichtung abgestützten Matratze, verformen sich die beiden Biegefederelemente 1, 2, indem die Hauptachse der Ellipse jeweils vergrößert und die Nebenachse verkleinert wird. Dabei legen sich die beiden Biegefederelemente 1, 2 mit ihren Flachseiten zunehmend an die Abstützfläche, beispielsweise eine Grundplatte, und die abgestützte Fläche, beispielsweise eine Deckplatte an. Dadurch verkleinern sich die federnden Bereiche der Biegefederelemente 1, 2 zunehmend, so daß die Federhärte der Biegefederelemente zunimmt. Es ergibt sich also eine kontinuierlich progressive Federkennlinie, was insbesondere bei Untermatratzen erwünscht ist.

Die Kippstabilität der Federvorrichtung ist aufgrund der quer zur Federachse I langgestreckten Form der beiden Biegefederelemente 1, 2 in Richtung der Ringebenen der beiden Biegefederelemente 1, 2 besonders hoch. Quer hierzu ist ebenfalls eine hohe Kippstabilität gegeben, da die beiden Biegefederelemente 1, 2 voneinander beabstandet sind. Insgesamt ergibt sich damit in allen Richtungen eine gute Kippstabilität der dargestellten und beschriebenen Federvorrichtung.

Eine weitere Verbesserung der Federeigenschaften und der Kippstabilität kann dadurch erreicht werden, daß die Materialstärke der beiden Biegefederelemente 1, 2 in den annähernd in Federrichtung verlaufenden Bereichen 7 verringert ist. Ebenso können diese Eigenschaften dadurch verbessert werden, daß die Breite der beiden Biegefederelemente 1, 2 in diesen Bereichen 7 verringert ist. Beides führt jeweils dazu, daß sich die erforderliche Biegekraft für die Erreichung eines bestimmten Federweges verringert. Auch dadurch erhöht sich die Stabilität der Vorrichtung.

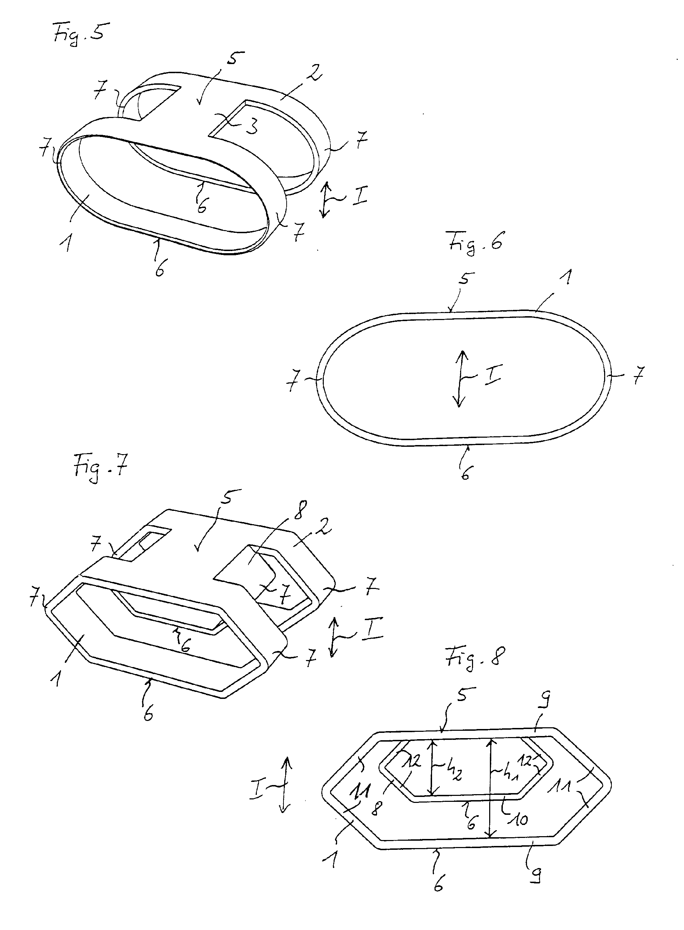

Die in den Fig. 5 und 6 dargestellte Variante einer erfindungsgemäßen Federvorrichtung ist ähnlich der in den Fig. 1 bis 4 dargestellten Variante. Im Unterschied zu der ersten Variante weisen die Biegefederelemente 1, 2 nicht die Form eines elliptischen Ringes, sondern die Form eines ovalen Ringes auf. Die langgestreckte Form quer zur Federrichtung I ist jedoch auch hier vorhanden, so daß die Kippstabilität in den Ringebenen besonders gut ist. Auch quer zu den Ringebenen ist die Kippstabilität gut, da auch bei dieser Variante zwei Biegefederelemente 1, 2 mit Abstand nebeneinander angeordnet sind. Somit ergibt sich auch hier eine gute Kippstabilität in allen Richtungen.

Ein weiterer Unterschied zu der ersten Variante besteht darin, daß die beiden voneinander beabstandeten Biegefederelemente 1, 2 nur in einem oberen Ringabschnitt über einen Verbindungsabschnitt 3 einstückig miteinander verbunden sind, während in den unteren Ringabschnitten kein Verbindungsabschnitt vorgesehen ist. Aufgrund des Abstandes zwischen den beiden Biegefederelementen 1, 2 ist die Abstützung der Federvorrichtung auf einer Unterlage dennoch gut. Dasselbe gilt, wenn anstelle des Verbindungsabschnittes 3 nur ein Verbindungsabschnitt 4 in den unteren Ringabschnitten der beiden Biegefederelemente 1,2 vorgesehen ist.

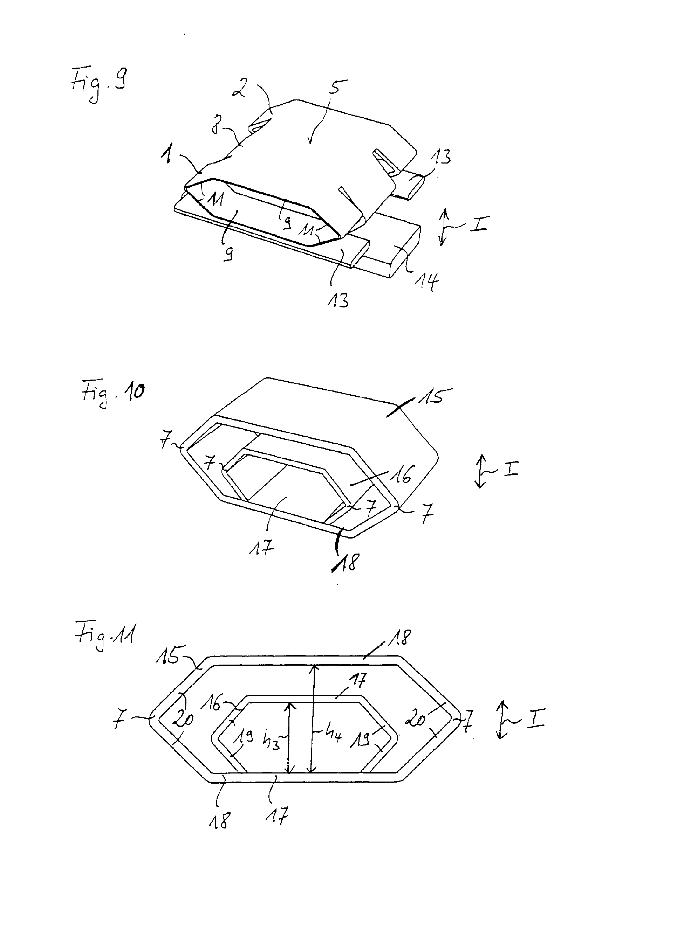

Die Fig. 7 und 8 zeigen eine Variante der erfindungsgemäßen Federvorrichtung, bei welcher zwischen den beiden Biegefederelementen 1, 2 ein drittes Biegefederelement 8 angeordnet ist. Alle drei Biegefederelemente 1, 2 und 8 weisen, wie man insbesondere in Fig. 8 erkennen kann, die Form eines langgestreckten, hexagonalen Ringes mit zwei zueinander parallelen, quer zur Federrichtung I verlaufenden Längsseiten 9, 10 und vier untereinander gleich langen Schmalseiten 11, 12 auf, wobei die Ringebenen aller drei Biegefederelemente 1, 2, 8 zueinander parallel verlaufen. Die Längsseiten 9 und die Schmalseiten 11 der beiden äußeren Biegefederelemente 1, 2 sind jeweils länger als die Längsseiten 10 und Schmalseiten 12 des mittleren Biegefederelementes 8. Die beiden äußeren Biegefederelemente 1, 2 weisen dadurch eine größere Höhe h₁ auf als die Höhe h₂ des mittleren Biegefederelementes 8.

Das mittlere Biegefederelement 8 ist mit den beiden äußeren Biegefederelementen 1, 2 einstückig ausgebildet, indem die oberen Längsseiten 9, 10 der drei Biegefederelemente 1, 2 und 8 bündig ineinander übergehen. Das heißt, die Breite des mittleren Biegefederelementes 8 entspricht dem Abstand der beiden äußeren Biegefederelemente 1, 2. Die oberen Längsseiten 9, 10 der Biegefederelemente 1, 2 und 8 bilden dadurch gemeinsam eine verhältnismäßig große obere Stützfläche 5. Ein unterer Verbindungsabschnitt zwischen den beiden äußeren Biegefederelementen 1, 2 ist wie bei der vorherigen Variante nicht vorhanden. Es ist aber grundsätzlich möglich, auch hier einen Verbindungsabschnitt vorzusehen. Außerdem ist es möglich, anstelle der oberen Längsseiten 9, 10 der drei Biegefederelemente 1, 2 und 8 deren untere Längsseiten 9, 10 einstückig miteinander auszubilden, indem diese bündig aneinander anschließen.

Durch die dargestellte und beschriebene Ausgestaltung dieser dritten Variante wird eine Federvorrichtung mit einer zweistufigen Federkennlinie erhalten. Bei Einbringen einer Kompressionskraft in Richtung der Federachse I kommen nämlich, wie man anhand der Fig. 7 und 8 leicht nachvollziehen kann, zunächst nur die beiden äußeren Biegefederelemente 1, 2 zur Wirkung. Erst nach Zurückliegen eines ersten Federweges, der der Differenz der Höhen h1 der beiden äußeren Biegefederelemente 1, 2 und der Höhe h₂ des mittleren Biegefederelementes 8 entspricht, kommt auch das mittlere Biegefederelement 8 zur Wirkung. Das heißt, zunächst bestimmen nur die beiden äußeren Biegefederelemente 1, 2 mit ihren Biegeeigenschaften die Federkennlinie, und erst in der zweiten Stufe bestimmen alle drei Biegefederelemente 1, 2 und 8 gemeinsam mit ihren Biegeeigenschaften die Federkennlinie der Federvorrichtung.

Aufgrund der Ausgestaltung mit zwei voneinander beabstandeten Biegefederelementen 1, 2, die jeweils eine quer zur Federrichtung I langgestreckte Form aufweisen, ist die Kippstabilität der dargestellten Biegevorrichtung in allen Richtungen hoch, und zwar sowohl während des ersten Federweges, wenn nur die beiden äußeren Biegefederelemente 1, 2 wirksam sind, als auch während des zweiten Federweges, wenn alle drei Biegefederelemente 1, 2 und 8 wirksam sind. Hinzu kommt, daß die Biegebereiche 7 der Biegefederelemente 1, 2 und 8, die jeweils in den Schmalseiten 11, 12 der Biegefederelemente 1, 2 und 8 gelegen sind, einen verhältnismäßig großen Abstand zur Federachse I aufweisen.

In Abwandlung von der dargestellten Ausführungsform können die schmalen Seiten 11, 12 der Biegefederelemente 1, 2 und 8 in bezug auf die jeweilige Ringfläche nicht nach außen, sondern nach innen abgewinkelt sein. Bei entsprechender Verlängerung der Längsseiten 9, 10 wird auch dann eine gute Kippstabilität in allen Richtungen erhalten.

Eine andere Möglichkeit, eine Federvorrichtung mit zweistufiger Federkennlinie zu realisieren, ist in Fig. 9 dargestellt. Auch hier sind drei Biegefederelemente 1, 2 und 8 in Form eines langgestreckten, hexagonalen Ringes nebeneinander und mit zueinander paralleler Ringebene angeordnet. Das mittlere Biegefederelement 8 weist hier jedoch dieselben Abmessungen auf wie die beiden äußeren Biegefederelemente 1, 2. Die zweistufige Federkennlinie wird nun dadurch realisiert, daß die Biegefederelemente 1, 2 und 8 mit unterschiedlichen Abstützmitteln zusammenwirken.

Wie dargestellt, sind nämlich die beiden äußeren Biegefederelemente 1, 2 dauernd auf einer Anschlagfläche 13 abgestützt, während das mittlere Biegefederelement 8 erst nach Zurücklegen eines ersten Federweges an einer Abstützfläche 14 zur Anlage kommt. Beim Einbringen einer Kompressionskraft in Richtung der Federachse I wird die Federkennlinie daher zunächst nur durch die Federeigenschaften der beiden äußeren Biegefederelemente 1, 2 bestimmt. Erst nach Zurücklegen des ersten Federweges, der dem Abstand des mittleren Biegefederelements 8 von der Abstützfläche 14 entspricht, wird die Federkennlinie auch durch die Federeigenschaften des mittleren Biegefederelementes 8 mitbestimmt.

Da die beiden äußeren Biegefederelemente 1, 2 einen großen Abstand zueinander aufweisen, weist die dargestellte Federvorrichtung auch senkrecht zu den Ringebenen eine hohe Kippstabilität auf. Da die beiden äußeren Biegefederelemente 1, 2 auch während des zweiten Federweges wirksam bleiben, bleibt auch die hohe Kippstabilität während des zweiten Federweges erhalten. Insgesamt weist daher auch diese Federvorrichtung eine hohe Kippstabilität in allen Richtungen auf.

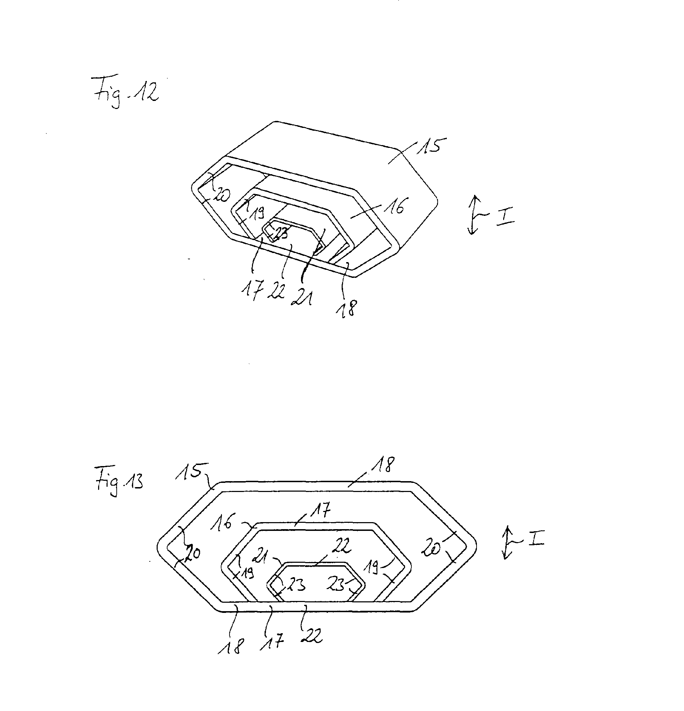

Eine andere Möglichkeit, eine zweitstufige Federkennlinie zu realisieren, ist durch die in den Fig. 10 und 11 dargestellte Federvorrichtung gezeigt. Dabei sind zwei jeweils die Form eines langgestreckten, hexagonalen Ringes mit zueinander parallelen Längsseiten aufweisende Biegefederelemente 15, 16 ineinander geschachtelt angeordnet. Insbesondere sind die beiden Biegefederelemente 15, 16 einstückig miteinander ausgebildet, indem die untere Längsseite 17 des inneren Biegefederelementes 16 einen Teil der unteren Längsseite 18 des äußeren Biegefederelementes 15 darstellt. Die Ringebenen der beiden Biegefederelemente 15, 16 sind dabei miteinander identisch.

Wie man insbesondere in Fig. 11 erkennt, sind die Schmalseiten 19 des inneren Biegefederelementes 16 und die Schmalseiten 20 des äußeren Biegefederelementes 15 jeweils untereinander gleich. Alle Seiten 17, 19 des inneren Biegefederelementes sind jedoch kürzer als die entsprechenden Seiten 18, 20 des äußeren Biegefederelementes 15. Dadurch weist das innere Biegefederelement 16 eine geringere Höhe h₃ auf als die Höhe h₄ des äußeren Biegefederelementes 15. Die Höhe h₃ des inneren Biegefederelementes 16 beträgt insbesondere ca. 50 % bis ca. 80 % der Höhe h₄ des äußeren Biegefederelementes 15, bevorzugt zwischen ca. 66 % und ca. 75 %. Damit wird ein gutes Verhältnis des ersten Federweges zum zweiten Federweg erreicht.

Bei Einbringen einer Kompressionskraft in Richtung der Federachse I wird zunächst nur das äußere Biegefederelement 15 belastet und komprimiert. Erst nach Zurücklegen eines ersten Federweges, der der Höhendifferenz zwischen dem ersten Biegefederelement 15 und dem zweiten Biegefederelement 16 entspricht, wird auch das zweite, innere Biegefederelement 16 belastet, da das äußere Biegefederelement 15 an dem inneren Biegefederelement zur Anlage kommt und die eingebrachte Kompressionskraft zum Teil auf das innere Biegefederelement 16 überträgt. Die Federkennlinie der Federvorrichtung ist daher während des ersten Federweges allein durch die Federeigenschaften des äußeren Biegefederelementes 15 bestimmt und während des zweiten Federweges durch die Federeigenschaften sowohl des äußeren Biegefederelementes 15 als auch des inneren Biegefederelementes 16.

Die auf diese Weise erzeugte zweistufige Federkennlinie kann insbesondere dazu verwendet werden, eine für Personen mit unterschiedlichem Körpergewicht geeignete Federvorrichtung zu schaffen. Hierfür wird die erste Stufe der Federkennlinie auf Personen mit geringerem Gewicht eingestellt, während die zweite Stufe auf Personen mit größerem Gewicht eingestellt wird. Aufgrund der zuvor angegebenen Höhenverhältnisse der beiden Biegefederelemente 15, 16 zueinander können für beide Personengruppen geeignete Federwege erreicht werden.

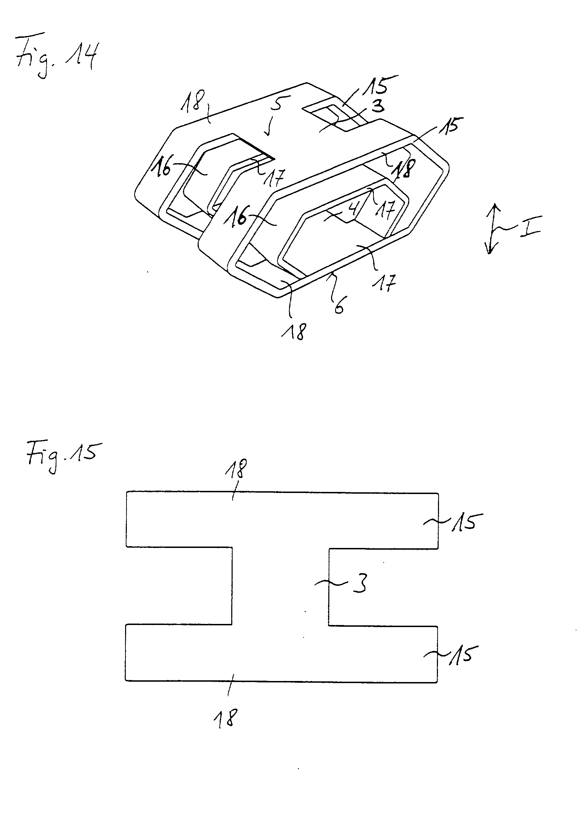

In den Fig. 12 und 13 ist eine Variante der erfindungsgemäßen Federvorrichtung dargestellt, die im Prinzip mit der Federvorrichtung der Fig. 10 und 11 übereinstimmt. Zusätzlich zu den beiden Biegefederelementen 15 und 16 ist hier jedoch noch ein drittes Biegefederelement 21 in das innere Biegefederelement 16 geschachtelt, wobei auch die Ringebene des dritten Biegefederelementes 21 mit den Ringebenen der beiden anderen Biegefederelemente 15 und 16 übereinstimmt. Auch die Form des dritten Biegefederelementes 21 stimmt mit derjenigen der beiden anderen Biegefederelementen 15, 16 überein. Es sind lediglich die beiden Längsseiten 22 und die vier Schmalseiten 23 des Hexagons kleiner als die entsprechenden Seiten 17, 19 des zweiten Biegefederelementes 16.

Auf diese Weise wird eine Federvorrichtung mit dreistufiger Federkennlinie erhalten. In der ersten Stufe bestimmt beim Einbringen einer Kompressionskraft in Federrichtung I nur das äußerste Biegefederelement 15 die Federkennlinie. In der zweiten Stufe, das heißt nach Zurücklegen eines ersten Federweges, der der Höhendifferenz zwischen dem äußersten Biegefederelement 15 und dem mittleren Biegefederelement 16 entspricht, kommt das äußerste Biegefederelement 15 an dem mittleren Biegefederelement 16 zur Anlage und überträgt auf dieses einen Teil der Kompressionkraft. Die zweite Stufe der Federkennlinie wird daher durch die beiden Biegefederelemente 15 und 16 bestimmt. Nach Zurücklegen eines zweiten Federweges, der der Höhendifferenz zwischen dem mittleren Biegefederelement 16 und dem inneren Biegefederelement 21 entspricht, kommt auch das mittlere Biegefederelement 16 an dem inneren Biegefederelement 21 zur Anlage, so daß ein Teil der Kompressionskraft nun auch auf das innerste Biegefederelement 21 übertragen wird. Bei einer weiteren Kompression wird dann die Federkennlinie zusätzlich auch durch die Federeigenschaften des innersten Biegefederelementes 21 bestimmt.

Die in den Fig. 14 und 15 dargestellte Variante ist vom Prinzip her eine Kombination der Varianten der Fig. 10, 11 und 1 bis 4. Bei dieser Federvorrichtung sind zwei Paare von zwei ineinander geschachtelten Biegefederelementen 15, 16 vorgesehen, die mit zueinander parallelen Ringebenen nebeneinander angeordnet sind. Die beiden Biegefederelemente 15, 16 eines jeden Paares umfassen ein äußeres Biegefederelement 15 und inneres Biegefederelement 16, die jeweils die Form eines langgestreckten, hexagonalen Ringes mit zueinander parallelen Längsseiten 17, 18 und jeweils untereinander gleich langen Schmalseiten 19, 20 aufweisen. Die Längsseiten 17 und Schmalseiten 19 des inneren Federelementes 16 sind dabei jeweils kürzer als die entsprechenden Seiten 18, 20 des äußeren Biegefederelementes 15, so daß das innere Biegefederelement 16 eine geringere Höhe aufweist als das äußere Biegefederelement 15. Das äußere Biegefederelement 15 und das innere Biegefederelement 16 sind außerdem miteinander einstückig ausgebildet, indem die untere Längsseite 17 des inneren Biegefederelementes 16 einen Teil der unteren Längsseite 18 des äußeren Biegefederelementes 15 darstellt.

Die beiden nebeneinander angeordneten Paare aus innerem Biegefederelement 16 und äußerem Biegefederelement 15 sind ebenfalls einstückig miteinander ausgebildet. Hierfür sind zwischen den voneinander beabstandeten Paaren Verbindungsabschnitte 3, 4 zwischen den beiden oberen Längsseiten 18 der beiden äußeren Biegefederelemente 15 und den beiden unteren Längsseiten 18 der beiden äußeren Biegefederelemente 15 vorgesehen. Auch zwischen den beiden oberen Längsseiten 17 der beiden inneren Biegefederelemente 16 kann ein solcher Verbindungsabschnitt vorgesehen sein. Die beiden Verbindungsabschnitte 3, 4 bilden jeweils wieder zusammen mit den benachbarten Abschnitten der beiden äußeren Biegefederelemente 15 eine obere Stützfläche 5 und eine untere Stützfläche 6, über welche sich die Federvorrichtung auf einer Unterlage abstützen bzw. eine Matratze oder dergleichen tragen kann. Hier wie bei all den anderen Varianten ist es jedoch auch möglich, separate Deckplatten und Grundplatten vorzusehen.

Die in den Fig. 14 und 15 dargestellte Federvorrichtung weist aufgrund der beiden mit Abstand nebeneinander angeordneten Paare von Biegefederelementen 15, 16 und deren langgestreckter Form quer zur Federrichtung I eine hohe Kippstabilität in allen Richtungen auf. Darüberhinaus ist durch die beiden inneren Federelemente 16 eine zweistufige Federkennlinie realisiert. Beim Einbringen einer Kompressionskraft in Richtung der Federachse I bestimmen zunächst nur die beiden äußeren Biegefederelemente 15 die Federkennlinie, während die beiden inneren Biegefederelemente 16 erst nach Zurücklegen eines ersten Federweges die Federkennlinie mitbestimmen, wobei dieser erste Federweg durch die Höhendifferenz zwischen der Höhe der inneren Biegefederelemente 16 und der Höhe der äußeren Biegefederelemente 15 bestimmt ist. Auch bei dieser Variante können die Stufen auf Personen mit unterschiedlichem Körpergewicht eingestellt sein. Die Höhendifferenz wird dann im zuvor beschriebenen Rahmen gewählt, um für beide Personengruppen vorteilhafte Federwege zu erzielen.

Die dargestellten und beschriebenen Federvorrichtungen weisen allesamt eine hohe Kippstabilität auf. Dies ist insbesondere durch die langgestreckte Form quer zur Federachse I bedingt. Die langgestreckte Form kann dabei im Prinzip beliebig sein. Insbesondere können die dargestellte elliptische, ovale und hexagonale Form bei allen Varianten vorgesehen sein. Die verschiedenen Formen können in einer Federvorrichtung auch miteinander kombiniert sein, insbesondere bei den Federvorrichtungen mit mehrstufiger Federkennlinie.

Desweiteren können alle Varianten in der dargestellten Form direkt als Federvorrichtung verwendet werden, oder aber sie können in Verbindung mit separaten Deckplatten und/oder Grundplatten zur Abstützung auf einer Stützfläche verwendet werden. Neben den dargestellten Federvorrichtungen mit zwei- oder dreistufiger Federkennlinie können auch Federvorrichtungen mit mehrstufiger Federkennlinie in derselben Weise aufgebaut werden, insbesondere indem mehr als drei Biegefederelemente ineinander geschachtelt werden. Auch können bei allen Varianten mehr als zwei oder drei Biegefederelemente nebeneinander angeordnet werden. Bei allen Varianten können die Biegefederelemente in den im wesentlichen in Federrichtung verlaufenden Bereichen 7 jeweils mit verringerter Materialstärke und/oder verringerter Breite ausgebildet werden. Bei ineinander geschachtelten Biegefederelementen können die inneren Biegefederelemente auch jeweils mit ihrer Oberseite statt mit ihrer Unterseite mit einem äußeren Biegefederelement verbunden sein.

Die Biegefederelemente können jeweils einstückig ausgebildet oder aus mehreren Elementen zusammengesetzt sein. In beiden Fällen können die Biegefederelemente auch nur über eine Deckplatte und/oder über eine Grundplatte miteinander verbunden sein, und die Ringform kann auch erst durch die Deckplatte und/oder die Grundplatte vervollständigt sein. Auch über die Verbindungsabschnitte kann die Ringform der Biegefederelemente vervollständigt sein, das heißt, die Biegefederelemente können im Bereich der Verbindungsabschnitte Ausnehmungen aufweisen.

### Bezugszeichenliste

- 1: Biegefederelement
- 2: Biegefederelement
- 3: Verbindungsabschnitt
- 4: Verbindungsabschnitt
- 5: obere Stützfläche
- 6: untere Stützfläche
- 7: Bereich
- 8: Biegefederelement
- 9: Längsseite von 1, 2
- 10: Längsseite von 8
- 11: Schmalseite von 1, 2
- 12: Schmalseite von 8
- 13: Abstützmittel
- 14: Abstützmittel
- 15: äußeres Biegefederelement
- 16: inneres Biegefederelement
- 17: Längsseite von 16
- 18: Längsseite von 15
- 19: Schmalseite von 16
- 20: Schmalseite von 15
- 21: Biegefederelement
- 22: Längsseite von 21
- 23: Schmalseite von 21

- I: Federrichtung
- h₁: Höhe von 1, 2
- h₂: Höhe von 8
- h₃: Höhe von 16
- h₄: Höhe von 15

## Patentansprüche

1. Federvorrichtung, insbesondere als Teil einer Untermatratze zur Abstützung oder als Federkern einer Polsterauflage oder Matratze, mit mindestens zwei nebeneinander angeordneten, im wesentlichen ringförmigen Biegefederelementen (1, 2), deren Ringebenen in Federrichtung (I) und zueinander parallel verlaufen und die in Federrichtung (I) gesehen in einem oberen und/oder unteren Ringabschnitt, insbesondere einstückig, miteinander verbunden sind, wobei die Biegefederelemente (1, 2) bevorzugt in der Ringebene quer zur Federrichtung (I) eine langgestreckte Form aufweisen, wobei weiterhin bevorzugt die Biegefederelemente (1, 2) einen Abstand zueinander aufweisen und in ihrem oberen und/oder unteren Ringabschnitt über einen zumindest annähernd senkrecht zur Federrichtung (I) verlaufenden Verbindungsabschnitt (3, 4) miteinander verbunden sind und wobei ebenfalls bevorzugt der Verbindungsabschnitt (3, 4) der Biegefederelemente (1, 2) als insbesondere zumindest annähernd ebene Stützfläche (5, 6) ausgebildet ist.

2. Federvorrichtung nach Anspruch 1,
**dadurch gekennzeichnet,**
**daß** mindestens drei Biegefederelemente (1, 2, 8) nebeneinander angeordnet sind, wobei die beiden äußersten Biegefederelemente (1, 2) bevorzugt eine untereinander gleiche Höhe h₁ aufweisen, die größer ist als die Höhe h₂ mindestens eines inneren Biegefederelementes (8), und wobei des weiteren bei einer Federvorrichtung mit zugeordneten Abstützmitteln, die beiden äußersten Biegefederelemente (1, 2) und mindestens ein inneres Biegefederelement (8) bevorzugt eine untereinander gleiche Höhe aufweisen und bei einer Kompression der Federvorrichtung jeweils mit Abstützmitteln (13, 14) zusammenwirken, wobei die Abstützmittel (13) der beiden äußersten Biegefederelemente (1, 2) untereinander gleichzeitig, aber vor den Abstützmitteln (14) mindestens eines inneren Biegefederelementes (8) zur Wirkung kommen.

3. Federvorrichtung mit mindestens zwei im wesentlichen ringförmigen Biegefederelementen (15, 16), deren Ringebenen in Federrichtung (I) verlaufen, insbesondere nach einem der vorherigen Ansprüche,
**dadurch gekennzeichnet,**
**daß** die Biegefederelemente (15, 16) mindestens zum Teil derart ineinander geschachtelt angeordnet sind, daß bei Einbringen einer Kompressionskraft ein äußeres Biegefederelement (15) jeweils nach Zurücklegen eines ersten Federweges an einem nächstinneren Biegefederelement (16) zur Anlage kommt und während eines zweiten Federweges einen Teil der Kompressionskraft auf dieses überträgt, wobei der erste Federweg bevorzugt jeweils ca. 20 % bis ca. 50 %, insbesondere ca. 25 % bis ca. 33 % des gesamten Federweges beträgt, wobei weiterhin die Ringebenen der Biegefederelemente (15, 16) bevorzugt zueinander parallel, insbesondere miteinander identisch, oder mindestens teilweise zueinander senkrecht sind.

4. Federvorrichtung nach Anspruch 3,
**dadurch gekennzeichnet,**
**daß** die Biegefederelemente (15, 16) miteinander einstückig ausgebildet sind und/oder daß mindestens zwei nebeneinander angeordnete innere Biegefederelemente (16) mit zueinander paralleler Ringebene in mindestens zwei nebeneinander angeordneten äußeren Biegefederelementen (15) mit zueinander paralleler Ringebene angeordnet sind.

5. Federvorrichtung nach einem der vorhergehenden Ansprüche,
**dadurch gekennzeichnet,**
**daß** die verschiedenen Stufen der Federkennlinie auf verschiedene Körpergewichte eingestellt sind und/oder daß die Biegefederelemente (1, 2) eine runde Form, insbesondere die Form einer Ellipse oder eines Ovals aufweisen, deren große Achse quer zur Federrichtung (I) verläuft oder daß die Biegefederelemente (1, 2, 8, 15, 16, 21) die Form eines Polygons aufweisen, welches insbesondere quer zur Federrichtung (I) eine größere Erstreckung aufweist als in Federrichtung (I), wobei die Biegefederelemente (1, 2, 8, 15, 16, 21) bevorzugt jeweils die Form eines quer zur Federrichtung (I) langgestreckten Hexagons aufweisen, dessen Längsseiten (9, 10, 17, 18, 22) zueinander parallel und dessen Schmalseiten (11, 12, 19, 20, 23) untereinander gleich lang sind, und wobei weiterhin die vier Schmalseiten (11, 12, 19, 20, 23) des Hexagons bevorzugt nach außen oder nach innen weisen.

6. Federvorrichtung nach einem der vorhergehenden Ansprüche,
**dadurch gekennzeichnet,**
**daß** die Biegefederelemente (1, 2, 8, 15, 16, 21) die Form eines flachen Bandes mit quer zur Federrichtung (I) verlaufenden Flachseiten aufweisen und/oder daß die Materialstärke der Biegefederelemente (1, 2, 8, 15, 16, 21) in den im wesentlichen in Federrichtung verlaufenden, relativ unelastischen Bereichen (7) reduziert ist.

7. Federvorrichtung nach einem der vorhergehenden Ansprüche,
**dadurch gekennzeichnet,**
**daß** die Breite der Biegefederelemente (1, 2, 8, 15, 16, 21) in diesen relativ unelastischen Bereichen (7) verringert ist.

8. Federvorrichtung nach einem der vorhergehenden Ansprüche,
**dadurch gekennzeichnet,**
**daß** in Federrichtung (I) gesehen auf der Oberseite und/oder der Unterseite der Biegefederelemente (1, 2, 8, 15, 16, 21) Befestigungsmittel, insbesondere hintergreifbare Ausnehmungen angeformt sind, zur Verbindung der Biegefederelemente (1, 2, 8, 15, 16, 21) mit einer Deckplatte und/oder einer Grundplatte.

9. Federvorrichtung nach einem der vorhergehenden Ansprüche,
**dadurch gekennzeichnet,**
**daß** die Biegefederelemente (1, 2, 8, 15, 16, 21) nur über eine Deckplatte und/oder über eine Grundplatte miteinander verbunden sind und/oder daß mindestens ein Teil der Biegefederelemente (1, 2, 8, 15, 16, 21) lösbar mit einer Deckplatte und/oder einer Grundplatte verbindbar ist.

10. Federvorrichtung nach einem der vorhergehenden Ansprüche,
**dadurch gekennzeichnet,**
**daß** die Biegefederelemente (1, 2, 8, 15, 16, 21) aus teilringförmigen Elementen zusammengesetzt sind.
